# EUROPEAN PATENT APPLICATION

(11) **EP 4 383 814 A1**
(43) Date of publication of application: **12.06.2024**
(21) Application number: 22852079.7
(22) Date of filing: 29.07.2022
(51) Int. Cl.: H04W 36/00, H04W 36/30

(54) **METHOD FOR STARTING NEIGHBORING CELL MEASUREMENT, AND TERMINAL AND NETWORK-SIDE DEVICE**

(30) Priority: 02.08.2021 CN 202110882889
(71) Applicant: Vivo Mobile Communication Co., Ltd., Dongguan, Guangdong 523863 (CN)
(72) Inventor: HE, Ranran, Dongguan, Guangdong 523863 (CN); YANG, Xiaodong, Dongguan, Guangdong 523863 (CN); BAO, Wei, Dongguan, Guangdong 523863 (CN); ZHANG, Yanxia, Dongguan, Guangdong 523863 (CN)
(74) Representative: Conti, Marco
(86) International application number: PCT/CN2022/109136
(87) International publication number: WO 2023/011366

(57) **Abstract**

This application pertains to the field of terminal communication technologies, and discloses a method for starting neighbor cell measurement, a terminal, and a network side device. The method for starting neighbor cell measurement in embodiments of this application includes: obtaining, by a terminal, target configuration information, where the target configuration information includes time information used to indicate the terminal to start neighbor cell measurement; and starting neighbor cell measurement based on the target configuration information.

## Description

### CROSS-REFERENCE TO RELATED APPLICATIONS

The present invention claims priority to Chinese Patent Application No. 202110882889.0, filed with the China National Intellectual Property Administration on August 2, 2021 and entitled "METHOD FOR STARTING NEIGHBOR CELL MEASUREMENT, TERMINAL, AND NETWORK SIDE DEVICE", which is incorporated herein by reference in its entirety.

### TECHNICAL FIELD

This application pertains to the field of terminal communication technologies, and in particular, to a method for starting neighbor cell measurement, a terminal, and a network side device.

### BACKGROUND

Non-terrestrial networks (Non-Terrestrial Networks, NTNs) usually mean networks or network segments using a satellite or an unmanned aircraft system (Unmanned Aircraft System, UAS) platform for transmission, and can provide a wider coverage range than terrestrial communication systems. At present, in some typical application scenarios (such as a scenario in which a ground base station cannot be built and scenario in which a ground base station is damaged), a terminal may perform communication based on a non-terrestrial network.

In the non-terrestrial network, a link between a satellite (or a UAS) and the terminal may be referred to as a service link, and a link between the satellite (or the UAS) and a ground base station may be referred to as a feeder link. A procedure in which the satellite serving the terminal is changed is referred to as a service link switchover. A procedure in which the ground base station serving the terminal is changed is referred to as a feeder link switchover. When there is a service link and/or feeder link switchover, the terminal needs to start neighbor cell measurement for cell reselection. In a conventional cell reselection mechanism, the terminal performs cell reselection based on signal strength/signal quality of a serving cell. If there has been a service link and/or feeder link switchover, it takes a while for the terminal to detect that the signal strength/signal quality has become poorer. As a result, there is a problem of delayed cell reselection performed by the terminal, and normal communication of the terminal is impacted.

### SUMMARY

Embodiments of this application provide a method for starting neighbor cell measurement, a terminal, and a network side device, to resolve a problem that a terminal cannot start neighbor cell measurement in time when there is a service link and/or feeder link switchover in a communication scenario based on a non-terrestrial network.

According to a first aspect, a method for starting neighbor cell measurement is provided. The method includes:
obtaining, by a terminal, target configuration information, where the target configuration information includes time information used to indicate the terminal to start neighbor cell measurement; and
starting neighbor cell measurement based on the target configuration information.

According to a second aspect, an apparatus for starting neighbor cell measurement is provided. The apparatus includes:
an obtaining module, configured to obtain target configuration information, where the target configuration information includes time information used to indicate the terminal to start neighbor cell measurement; and
a measurement module, configured to start neighbor cell measurement based on the target configuration information.

According to a third aspect, a method for starting neighbor cell measurement is provided. The method includes:
sending, by a network side device to a terminal, target configuration information, where the target configuration information is used to indicate the terminal to start neighbor cell measurement based on the target configuration information, and the target configuration information includes time information used to indicate the terminal to start neighbor cell measurement.

According to a fourth aspect, an apparatus for starting neighbor cell measurement is provided. The apparatus includes:
a sending module, configured to send target configuration information to a terminal, where the target configuration information is used to indicate the terminal to start neighbor cell measurement based on the target configuration information, and the target configuration information includes time information used to indicate the terminal to start neighbor cell measurement.

According to a fifth aspect, a terminal is provided. The terminal includes a processor, a memory, and a program or an instruction that is stored in the memory and that is executable on the processor. When the program or the instruction is executed by the processor, steps of the method according to the first aspect are implemented.

According to a sixth aspect, a terminal is provided. The terminal includes a processor and a communication interface. The communication interface is configured to obtain target configuration information, where the target configuration information includes time information used to indicate the terminal to start neighbor cell measurement. The processor is configured to start neighbor cell measurement based on the target configuration information.

According to a seventh aspect, a network side device is provided. The network side device includes a processor, a memory, and a program or an instruction that is stored in the memory and that is executable on the processor. When the program or the instruction is executed by the processor, steps of the method according to the third aspect are implemented.

According to an eighth aspect, a network side device is provided. The network side device includes a processor and a communication interface. The communication interface is configured to send target configuration information to a terminal, where the target configuration information is used to indicate the terminal to start neighbor cell measurement based on the target configuration information, and the target configuration information includes time information used to indicate the terminal to start neighbor cell measurement.

According to a ninth aspect, a readable storage medium is provided. The readable storage medium stores a program or an instruction. When the program or the instruction is executed by a processor, steps of the method according to the first aspect or steps of the method according to the third aspect are implemented.

According to a tenth aspect, a chip is provided. The chip includes a processor and a communication interface. The communication interface is coupled to the processor, and the processor is configured to run a program or an instruction to implement the method according to the first aspect or the method according to the third aspect.

According to an eleventh aspect, a computer program/program product is provided. The computer program/program product is stored in a non-volatile storage medium, and the program/program product is executed by at least one processor to implement steps of the method according to the first aspect or the method according to the third aspect.

In the embodiments of this application, because the network side device can indicate, by using the target configuration information, the time information indicating the terminal to start neighbor cell measurement to the terminal, the terminal can start neighbor cell measurement based on the target configuration information before a link switchover, to avoid a problem of delayed cell reselection performed by the terminal due to the link switchover and ensure service continuity of the terminal.

### BRIEF DESCRIPTION OF DRAWINGS

FIG. 1 is a schematic diagram of a non-terrestrial network system according to an embodiment of this application;
FIG. 2 is a schematic flowchart of a method for starting neighbor cell measurement according to an embodiment of this application;
FIG. 3 is a schematic flowchart of a method for starting neighbor cell measurement according to an embodiment of this application;
FIG. 4 is a schematic diagram of a structure of an apparatus for starting neighbor cell measurement according to an embodiment of this application;
FIG. 5 is a schematic diagram of a structure of an apparatus for starting neighbor cell measurement according to an embodiment of this application;
FIG. 6 is a schematic diagram of a structure of a communication device according to an embodiment of this application;
FIG. 7 is a schematic diagram of a structure of a terminal according to an embodiment of this application; and
FIG. 8 is a schematic diagram of a structure of a network side device according to an embodiment of this application.

### DESCRIPTION OF EMBODIMENTS

The following clearly describes the technical solutions in embodiments of this application with reference to the accompanying drawings in the embodiments of this application. Clearly, the described embodiments are some of but not all the embodiments of this application. All other embodiments obtained by a person of ordinary skill in the art based on the embodiments of this application shall fall within the protection scope of this application.

The terms "first", "second", and the like in the description and the claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and the character "/" generally represents an "or" relationship between associated objects.

It should be noted that, the technologies described in the embodiments of this application are not limited to a long term evolution (Long Term Evolution, LTE)/LTE-advanced (LTE-Advanced, LTE-A) system, and can also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following descriptions for illustrative purposes, and terminology in NR is used in most of the following descriptions, although these technologies can also be applied to application other than the NR system application, for example, a 6^{th} generation (6^{th} Generation, 6G) communication system.

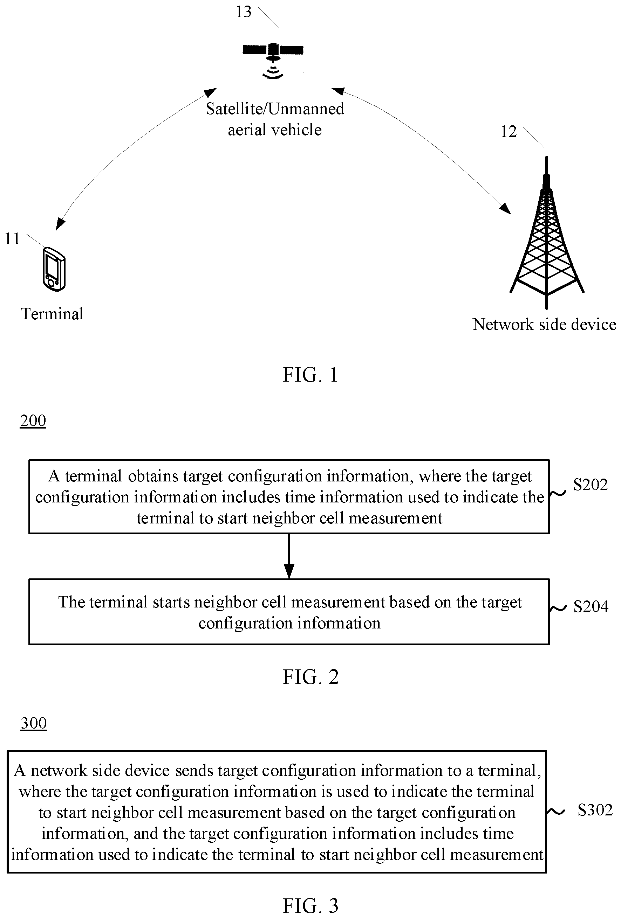

FIG. 1 is a block diagram of a non-terrestrial network system to which embodiments of this application can be applied. The non-terrestrial network system includes a terminal 11, a network side device 12, and a satellite (or an unmanned aerial vehicle) 13. The terminal 11 may also be referred to as a terminal device or user equipment (User Equipment, UE). The terminal 11 may be a terminal side device, for example, a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a smart watch, a band, a headset, glasses, and the like. It should be noted that a specific type of the terminal 11 is not limited in this embodiment of this application. The network side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission reception point (Transmission Reception Point, TRP), or another appropriate term in the art. As long as same technical effect is achieved, the base station is not limited to a specified technical term. It should be noted that, in the embodiments of this application, only a base station in an NR system is used as an example, but a specific type of the base station is not limited. The satellite 13 may be a low earth orbit (Low Earth Orbit, LEO) satellite, a medium earth orbit (Medium Earth Orbit, MEO) satellite, a geostationary earth orbit (Geostationary Earth Orbit, GEO) satellite, or a highly elliptical orbit (Highly Elliptical Orbit, HEO) satellite.

Generally, compared with a terrestrial communication system, a satellite-based non-terrestrial communication system has a wider coverage range, where a typical application scenario includes a case in which a ground base station cannot be built and a case in which a ground base station is damaged. For example, the satellite-based non-terrestrial communication system may be used for continuous coverage over a remote mountainous area, a desert, an ocean, or a forest, or emergency communication when a natural disaster has happened or a ground base station has been damaged. A typical scenario of a non-terrestrial network includes a transparent forwarding mode and a signal regenerative mode. In the transparent forwarding scenario, a satellite may be used as a forwarding relay, and in the signal regenerative scenario, a satellite may be used directly as a base station.

In the non-terrestrial network system shown in FIG. 1, a link between the satellite 13 and the terminal 11 is referred to as a service link, and a link between the satellite 13 and the network side device 12 is referred to as a feeder link. In the technical solution provided in the embodiments of this application, neighbor cell measurement can be started before a service link switchover and/or a feeder link switchover, to avoid a problem that cell reselection is performed by the terminal too late due to the link switchover and ensure service continuity of the terminal.

The non-terrestrial network system shown in FIG. 1 may support the following three types of service links.

The first type is Earth-fixed, provisioned by a beam continuously covering a same geographical area all the time (for example, a beam generated by a geostationary satellite orbit satellite).

The second type is quasi-Earth-fixed, provisioned by a beam covering one geographic area for a limited period and another geographic area during another period (for example, a steerable beam generated by a non-geostationary satellite orbit satellite).

The third type is Earth-moving, provisioned by a beam whose coverage area slides over the Earth surface (for example, a fixed or non-steerable beam generated by a non-geostationary satellite orbit satellite).

For any one or more types of service links described above, in the technical solution provided in the embodiments of this application, neighbor cell measurement can be started before a service link switchover, to avoid a problem of delayed cell reselection and ensure service continuity of the terminal.

With reference to the accompanying drawings, the following describes in detail a method for starting neighbor cell measurement, a terminal, and a network side device provided in the embodiments of this application based on some embodiments and application scenarios thereof.

As shown in FIG. 2, an embodiment of this application provides a method 200 for starting neighbor cell measurement. The method may be performed by a terminal. In other words, the method may be performed by software or hardware installed/mounted on the terminal. The method includes the following steps.

S202: A terminal obtains target configuration information, where the target configuration information includes time information used to indicate the terminal to start neighbor cell measurement.

In a non-terrestrial network, the terminal may obtain the target configuration information through communication with a network side device via a satellite (or an unmanned aerial vehicle). The target configuration information may be obtained through configuration of the network side device. The target configuration information may include the time information used to indicate the terminal to start neighbor cell measurement. Start time for performing neighbor cell measurement that is indicated by the time information is before time at which a link switchover occurs. In this way, the terminal can start neighbor cell measurement before the link switchover.

In this embodiment of this application, the step in which the terminal obtains the target configuration information may be implemented in at least one of the following manners.

The first manner is that the terminal obtains the target configuration information by using a system broadcast message.

For example, the terminal may obtain the target configuration information by using a system message (System Information Block, SIB). The system information blocks may be SIB2, SIB3, SIB4, SIB5, or the like.

The second manner is that the terminal obtains the target configuration information by using dedicated signaling.

For example, the terminal may obtain the target configuration information by using radio resource control (Radio Resource Control, RRC) signaling. The RRC signaling may be an RRC release (RRC Release) message or the like.

The third manner is that the terminal obtains the target configuration information by using a historically received message.

The historically received message may be a system broadcast message or dedicated signaling received by the terminal before. The target configuration information may be carried in the historically received message. For example, the terminal has accessed to a current serving cell some time prior and has obtained a system message or dedicated signaling of the serving cell. In this case, the terminal may obtain the target configuration information from the foregoing historically received message. The historically received message includes, but is not limited to, RRC signaling and/or a system information block.

In this embodiment of this application, the target configuration information obtained by the terminal may include at least one of the following:
(1) First time, where the first time is used to indicate service stop time of a serving cell.
   The first time may be at least one of absolute time and time corresponding to a timer. The service stop time may indicate time at which a link (service link or feeder link) switchover occurs. The absolute time includes coordinated universal time (Coordinated Universal Time, UTC), daylight saving time (Daylight Saving Time, DST), global positioning system (Global Positioning System, GPS) time, local time, and the like. If a network side provides absolute time T1, it indicates that the serving cell stops providing a service at the time T1. The time corresponding to the timer may be configured by the network side device. The terminal starts the timer after receiving the target configuration information. The running timer indicates that a network can provide a service, that is, a link switchover has not occurred. The expired timer indicates that the network stops providing the service, that is, a link switchover has occurred.
(2) A first offset, where the first time and the first offset are used to indicate first start time for performing neighbor cell measurement.
   The first offset may indicate time for starting neighbor cell measurement. When the first offset is less than 0, a sum of the first time and the first offset is used to indicate the first start time for performing neighbor cell measurement. When the first offset is greater than 0, a difference between the first time and the first offset is used to indicate the first start time for performing neighbor cell measurement. The first start time indicated by the first time and the first offset is before time at which a link switchover occurs. In this way, the terminal can start neighbor cell measurement before the link switchover. Neighbor cell measurement herein may be at least one of the following: higher priority inter-frequency (NR inter-frequency) or inter-RAT frequency (inter-RAT frequency) neighbor cell measurement; intra-frequency neighbor cell measurement; and equal or lower priority inter-frequency or low priority inter-RAT frequency neighbor cell measurement.
(3) Second time, where the second time is used to indicate second start time for performing neighbor cell measurement.
   The second start time indicated by the second time is before time at which a link switchover occurs. In this way, the terminal can start neighbor cell measurement before the link switchover. The second time may be at least one of absolute time and time corresponding to a timer. The absolute time includes UTC, DST, GPS time, local time, and the like. If the network side provides absolute time T2, it indicates that the terminal may start neighbor cell measurement at the time T2. The time corresponding to the timer may be configured by the network side device. The terminal starts the timer after receiving the target configuration information. If the timer is running, the terminal may not perform neighbor cell measurement. If the timer has expired, the terminal performs neighbor cell measurement. Neighbor cell measurement herein may be at least one of the following: higher priority inter-frequency or inter-RAT frequency neighbor cell measurement; intra-frequency neighbor cell measurement; and equal or lower priority inter-frequency or low priority inter-RAT frequency neighbor cell measurement.
(4) A second offset, where the first time and the second offset are used to indicate third start time for performing higher priority inter-frequency or inter-RAT frequency neighbor cell measurement.
   The second offset may indicate time for starting higher priority inter-frequency or inter-RAT frequency neighbor cell measurement. When the second offset is less than 0, a sum of the first time and the second offset is used to indicate the third start time for performing higher priority inter-frequency or inter-RAT frequency neighbor cell measurement. When the second offset is greater than 0, a difference between the first time and the second offset is used to indicate the third start time for performing higher priority inter-frequency or inter-RAT frequency neighbor cell measurement. The third start time indicated by the first time and the second offset is before time at which a link switchover occurs. In this way, the terminal can start higher priority inter-frequency or inter-RAT frequency neighbor cell measurement before the link switchover.
(5) A third offset, where the first time and the third offset are used to indicate fourth start time for performing intra-frequency neighbor cell measurement.
   The third offset may indicate time for starting intra-frequency neighbor cell measurement. When the third offset is less than 0, a sum of the first time and the third offset is used to indicate the fourth start time for performing intra-frequency neighbor cell measurement. When the third offset is greater than 0, a difference between the first time and the third offset is used to indicate the fourth start time for performing intra-frequency neighbor cell measurement. The fourth start time indicated by the first time and the third offset is before time at which a link switchover occurs. In this way, the terminal can start intra-frequency neighbor cell measurement before the link switchover.
(6) A fourth offset, where the first time and the fourth offset are used to indicate fifth start time for performing equal or lower priority inter-frequency or lower priority inter-RAT frequency neighbor cell measurement.
   The fourth offset may indicate time for starting equal or lower priority inter-frequency or lower priority inter-RAT frequency neighbor cell measurement. When the fourth offset is less than 0, a sum of the first time and the fourth offset is used to indicate the fifth start time for performing equal or lower priority inter-frequency or lower priority inter-RAT frequency neighbor cell measurement. When the fourth offset is greater than 0, a difference between the first time and the fourth offset is used to indicate the fifth start time for performing equal or lower priority inter-frequency or lower priority inter-RAT frequency neighbor cell measurement. The fifth start time indicated by the first time and the fourth offset is before time at which a link switchover occurs. In this way, the terminal can start equal or lower priority inter-frequency or lower priority inter-RAT frequency neighbor cell measurement before the link switchover.
(7) Third time, where the third time is used to indicate sixth start time for performing higher priority inter-frequency or inter-RAT frequency neighbor cell measurement.

The sixth start time indicated by the third time is before time at which a link switchover occurs. In this way, the terminal can start higher priority inter-frequency or inter-RAT frequency neighbor cell measurement before the link switchover.

The third time may be at least one of absolute time and time corresponding to a timer. The absolute time includes UTC, DST, GPS time, local time, and the like. If the network side provides absolute time T3, it indicates that the terminal may start higher priority inter-frequency or inter-RAT frequency neighbor cell measurement at the time T3. The time corresponding to the timer may be configured by the network side device. The terminal starts the timer after receiving the target configuration information. If the timer is running, the terminal may not perform higher priority inter-frequency or inter-RAT frequency neighbor cell measurement. If the timer has expired, the terminal performs higher priority inter-frequency or inter-RAT frequency neighbor cell measurement.

(8) Fourth time, where the fourth time is used to indicate seventh start time for performing intra-frequency neighbor cell measurement.

The seventh start time indicated by the fourth time is before time at which a link switchover occurs. In this way, the terminal can start intra-frequency neighbor cell measurement before the link switchover.

The fourth time may be at least one of absolute time and time corresponding to a timer. The absolute time includes UTC, DST, GPS time, local time, and the like. If the network side provides absolute time T4, it indicates that the terminal may start intra-frequency neighbor cell measurement at the time T4. The time corresponding to the timer may be configured by the network side device. The terminal starts the timer after receiving the target configuration information. If the timer is running, the terminal may not perform intra-frequency neighbor cell measurement. If the timer has expired, the terminal performs intra-frequency neighbor cell measurement.

(9) Fifth time, where the fifth time is used to indicate eighth start time for performing equal or lower priority inter-frequency or lower priority inter-RAT frequency neighbor cell measurement.

The eighth start time indicated by the fifth time is before time at which a link switchover occurs. In this way, the terminal can start equal or lower priority inter-frequency or lower priority inter-RAT frequency neighbor cell measurement before the link switchover.

The fifth time may be at least one of absolute time and time corresponding to a timer. The absolute time includes UTC, DST, GPS time, local time, and the like. If the network side provides absolute time T5, it indicates that the terminal may start equal or lower priority inter-frequency or lower priority inter-RAT frequency neighbor cell measurement at the time T5. The time corresponding to the timer may be configured by the network side device. The terminal may start the timer after receiving the target configuration information. If the timer is running, the terminal may not perform equal or lower priority inter-frequency or lower priority inter-RAT frequency neighbor cell measurement. If the timer has expired, the terminal performs equal or lower priority inter-frequency or lower priority inter-RAT frequency neighbor cell measurement.
(10) A first threshold, where the first threshold is used to indicate a signal strength threshold that a serving cell needs to satisfy for starting intra-frequency neighbor cell measurement.
(11) A second threshold, where the second threshold is used to indicate a signal quality threshold that the serving cell needs to satisfy for starting intra-frequency neighbor cell measurement.
(12) A third threshold, where the third threshold is used to indicate a signal strength threshold that the serving cell needs to satisfy for starting equal or lower priority inter-frequency or lower priority inter-RAT frequency neighbor cell measurement.
(13) A fourth offset, where the fourth offset is used to indicate a signal quality threshold that the serving cell needs to satisfy for starting equal or lower priority inter-frequency or lower priority inter-RAT frequency neighbor cell measurement.

In this embodiment, the first threshold, the second threshold, the third threshold, and the fourth threshold may all be configured by the network side device. Values of the foregoing first offset, second offset, third offset, and fourth offset may be the same or different. The second time, the third time, the fourth time, and the fifth time may be the same or different.

S204: Start neighbor cell measurement based on the target configuration information.

In S204, the terminal starts neighbor cell measurement based on the target configuration information after receiving the target configuration information. Because the target configuration information includes the time information indicating the terminal to start neighbor cell measurement, the terminal can start neighbor cell measurement based on the target configuration information in advance, that is, perform cell reselection before a link switchover, to avoid a problem of delayed cell reselection performed by the terminal due to the link switchover and ensure service continuity of the terminal during the link switchover.

How the terminal starts neighbor cell measurement based on the target configuration information is described in detail below by using four specific implementations.

In the first implementation, the target configuration information may include the foregoing first time, first offset, first threshold, second threshold, third threshold, and fourth threshold. In this case, that the terminal starts neighbor cell measurement based on the target configuration information may include the following steps.

For higher priority inter-frequency or inter-RAT frequency:
The terminal performs higher priority inter-frequency or inter-RAT frequency neighbor cell measurement throughout. In this way, it is ensured that a frequency of a cell providing a communication service for the terminal is of a higher priority, to provide a better communication service for the terminal.

Alternatively, the terminal may determine, based on the first time and the first offset in the target configuration information, the first start time used to indicate to perform neighbor cell measurement, and determine whether current time has reached the first start time. If the current time has not reached the first start time, the terminal may skip performing higher priority inter-frequency or inter-RAT frequency neighbor cell measurement, or if the current time has reached the first start time, the terminal performs higher priority inter-frequency or inter-RAT frequency neighbor cell measurement. In this way, for higher priority inter-frequency or inter-RAT frequency neighbor cell measurement, because the terminal can perform neighbor cell measurement when the current time reaches the first start time, and the first start time is before a link switchover, it is ensured that the terminal performs neighbor cell measurement before the link switchover, to avoid a problem of delayed cell reselection and ensure service continuity of the terminal during the link switchover.

### For intra-frequency:

The terminal may determine whether a signal status of the serving cell satisfies a first preset condition and whether current time has reached the first start time. The signal status may include signal strength and signal quality. That the signal status satisfies the first preset condition may be that the signal strength is greater than the first threshold and the signal quality is higher than the second threshold. That the signal status does not satisfy the first preset condition may be that the signal strength is less than or equal to the first threshold and the signal quality is lower than or equal to the second threshold.

If the signal status of the serving cell satisfies the first preset condition and the current time has not reached the first start time, the terminal may skip performing intra-frequency neighbor cell measurement, or if the signal status of the serving cell does not satisfy the first preset condition or the current time has reached the first start time, the terminal performs intra-frequency neighbor cell measurement.

Alternatively, if the signal status of the serving cell satisfies the first preset condition or the current time has not reached the first start time, the terminal may skip performing intra-frequency neighbor cell measurement, or if the signal status of the serving cell does not satisfy the first preset condition and the current time has reached the first start time, the terminal performs intra-frequency neighbor cell measurement.

In this way, for intra-frequency neighbor cell measurement, because the terminal can perform neighbor cell measurement when the current time reaches the first start time, and the first start time is before time at which a link switchover occurs, it is ensured that the terminal performs neighbor cell measurement before the link switchover, to avoid a problem of delayed cell reselection and ensure service continuity of the terminal during the link switchover.

For equal or lower priority inter-frequency or lower priority inter-RAT frequency:
The terminal may determine whether a signal status of the serving cell satisfies a second preset condition and whether current time has reached the first start time. That the signal status satisfies the second preset condition may be that signal strength is greater than the third threshold and signal quality is higher than the fourth threshold. That the signal status does not satisfy the second preset condition may be that the signal strength is less than or equal to the third threshold and the signal quality is lower than or equal to the fourth threshold.

If the signal status of the serving cell satisfies the second preset condition and the current time has not reached the first start time, the terminal may skip performing equal or lower priority inter-frequency or lower priority inter-RAT frequency neighbor cell measurement, or if the signal status of the serving cell does not satisfy the second preset condition or the current time has reached the first start time, the terminal performs equal or lower priority inter-frequency or lower priority inter-RAT frequency neighbor cell measurement.

Alternatively, if the signal status of the serving cell satisfies the second preset condition or the current time has not reached the first start time, the terminal may skip performing equal or lower priority inter-frequency or lower priority inter-RAT frequency neighbor cell measurement, or if the signal status of the serving cell does not satisfy the second preset condition and the current time has reached the first start time, the terminal performs equal or lower priority inter-frequency or lower priority inter-RAT frequency neighbor cell measurement.

In this way, for equal or lower priority inter-frequency or lower priority inter-RAT frequency neighbor cell measurement, because the terminal can perform neighbor cell measurement when the current time reaches the first start time, and the first start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the first start time is determined, in a specific implementation, in a case in which the first time is configured to be the absolute time T1, the first offset is configured to be a time length L1, and the first start time is time obtained by subtracting the time length L1 from the absolute time T1, if the current time has reached the time obtained by subtracting the time length L1 from the absolute time T1, it indicates that the current time has reached the first start time; or if the current time has not reached the time obtained by subtracting the time length L1 from the absolute time T1, it indicates that the current time has not reached the first start time.

In another specific implementation, in a case in which the first time is configured to be the time corresponding to the timer, a length of the time corresponding to the timer is S 1, and the first offset is configured to be a time length L1, when the timer has reached time obtained by subtracting the time length L1 from the length of the time corresponding to the time corresponding to the timer S 1, it indicates that the current time has reached the first start time; or when the timer has not reached time obtained by subtracting the time length L 1 from the length of the time corresponding to the timer S 1, it indicates that the current time has not reached the first start time.

In the second implementation, the target configuration information may include the foregoing second time, first threshold, second threshold, third threshold, and fourth threshold. In this case, that the terminal starts neighbor cell measurement based on the target configuration information may include the following steps.

For higher priority inter-frequency or inter-RAT frequency:
The terminal performs higher priority inter-frequency or inter-RAT frequency neighbor cell measurement throughout. In this way, it is ensured that a frequency of a cell providing a communication service for the terminal is of a higher priority, to provide a better communication service for the terminal.

Alternatively, the terminal may determine whether current time has reached the second start time indicated by the second time. If the current time has not reached the second start time, the terminal may skip performing higher priority inter-frequency or inter-RAT frequency neighbor cell measurement, or if the current time has reached the second start time, the terminal performs higher priority inter-frequency or inter-RAT frequency neighbor cell measurement. In this way, for higher priority inter-frequency or inter-RAT frequency neighbor cell measurement, because the terminal can perform neighbor cell measurement when the current time reaches the second start time, and the second start time is before time at which a link switchover occurs, it is ensured that the terminal performs neighbor cell measurement before the link switchover, to avoid a problem of delayed cell reselection and ensure service continuity of the terminal during the link switchover.

For intra-frequency:
The terminal may determine whether a signal status of the serving cell satisfies a first preset condition and whether current time has reached the second start time.

If the signal status of the serving cell satisfies the first preset condition and the current time has not reached the second start time, the terminal may skip performing intra-frequency neighbor cell measurement, or if the signal status of the serving cell does not satisfy the first preset condition or the current time has reached the second start time, the terminal performs intra-frequency neighbor cell measurement.

Alternatively, if the signal status of the serving cell satisfies the first preset condition or the current time has not reached the second start time, the terminal may skip performing intra-frequency neighbor cell measurement, or if the signal status of the serving cell does not satisfy the first preset condition and the current time has reached the second start time, the terminal performs intra-frequency neighbor cell measurement.

In this way, for intra-frequency neighbor cell measurement, because the terminal can perform neighbor cell measurement when the current time reaches the second start time, and the second start time is before time at which a link switchover occurs, it is ensured that the terminal performs neighbor cell measurement before the link switchover, to avoid a problem of delayed cell reselection and ensure service continuity of the terminal during the link switchover.

For equal or lower priority inter-frequency or lower priority inter-RAT frequency:
The terminal may determine whether a signal status of the serving cell satisfies a second preset condition and whether current time has reached the second start time.

If the signal status of the serving cell satisfies the second preset condition and the current time has not reached the second start time, the terminal may skip performing equal or lower priority inter-frequency or lower priority inter-RAT frequency neighbor cell measurement, or if the signal status of the serving cell does not satisfy the second preset condition or the current time has reached the second start time, the terminal performs equal or lower priority inter-frequency or lower priority inter-RAT frequency neighbor cell measurement.

Alternatively, if the signal status of the serving cell satisfies the second preset condition or the current time has not reached the second start time, the terminal may skip performing equal or lower priority inter-frequency or lower priority inter-RAT frequency neighbor cell measurement, or if the signal status of the serving cell does not satisfy the second preset condition and the current time has reached the second start time, the terminal performs equal or lower priority inter-frequency or lower priority inter-RAT frequency neighbor cell measurement.

In this way, for equal or lower priority inter-frequency or lower priority inter-RAT frequency neighbor cell measurement, because the terminal can perform neighbor cell measurement when the current time reaches the second start time, and the second start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the second start time is determined, in a specific implementation, in a case in which the second time is configured to be the absolute time T2, if the current time has reached the absolute time T2, it indicates that the current time has reached the second start time; or if the current time has not reached the absolute time T2, it indicates that the current time has not reached the second start time.

In another specific implementation, in a case in which the second time is configured to be the time corresponding to the timer and a length of the time corresponding to the timer is S2, when the timer has reached the length S2 of the time corresponding to the timer, it indicates that the current time has reached the second start time; or when the timer has not reached the length S2 of the time corresponding to the timer, it indicates that the current time has not reached the second start time.

In the third implementation, the target configuration information may include the foregoing first time, second offset, third offset, fourth offset, first threshold, second threshold, third threshold, and fourth threshold. In this case, that the terminal starts neighbor cell measurement based on the target configuration information may include the following steps.

For higher priority inter-frequency or inter-RAT frequency:
The terminal performs higher priority inter-frequency or inter-RAT frequency neighbor cell measurement throughout. In this way, it is ensured that a frequency of a cell providing a communication service for the terminal is of a higher priority, to provide a better communication service for the terminal.

Alternatively, the terminal may determine, based on the first time and the second offset in the target configuration information, the third start time used to indicate to perform higher priority inter-frequency or inter-RAT frequency neighbor cell measurement, and determine whether current time has reached the third start time. If the current time has not reached the third start time, the terminal may skip performing higher priority inter-frequency or inter-RAT frequency neighbor cell measurement, or if the current time has reached the third start time, the terminal performs higher priority inter-frequency or inter-RAT frequency neighbor cell measurement. In this way, for higher priority inter-frequency or inter-RAT frequency neighbor cell measurement, because the terminal can perform neighbor cell measurement when the current time reaches the third start time, and the third start time is before a link switchover, it is ensured that the terminal performs neighbor cell measurement before the link switchover, to avoid a problem of delayed cell reselection and ensure service continuity of the terminal during the link switchover.

When whether the current time has reached the third start time is determined, in a specific implementation, in a case in which the first time is configured to be the absolute time T1, the second offset is configured to be a time length L2, and the third start time is time obtained by subtracting the time length L2 from the absolute time T1, if the current time has reached the time obtained by subtracting the time length L2 from the absolute time T1, it indicates that the current time has reached the third start time; or if the current time has not reached the time obtained by subtracting the time length L2 from the absolute time T1, it indicates that the current time has not reached the third start time.

In another specific implementation, in a case in which the first time is configured to be the time corresponding to the timer, a length of the time corresponding to the timer is S3, and the second offset is configured to be a time length L2, when the timer has reached time obtained by subtracting the time length L2 from the length of the time corresponding to the timer S3, it indicates that the current time has reached the third start time; or when the timer has not reached time obtained by subtracting the time length L2 from the length of the time corresponding to the timer S3, it indicates that the current time has not reached the third start time.

For intra-frequency:
The terminal may determine, based on the first time and the third offset in the target configuration information, the fourth start time used to indicate to perform intra-frequency measurement, and determine whether a signal status of the serving cell satisfies the first preset condition and current time has reached the fourth start time.

If the signal status of the serving cell satisfies the first preset condition and the current time has not reached the fourth start time, the terminal may skip performing intra-frequency neighbor cell measurement, or if the signal status of the serving cell does not satisfy the first preset condition or the current time has reached the fourth start time, the terminal performs intra-frequency neighbor cell measurement.

Alternatively, if the signal status of the serving cell satisfies the first preset condition or the current time has not reached the fourth start time, the terminal may skip performing intra-frequency neighbor cell measurement, or if the signal status of the serving cell does not satisfy the first preset condition and the current time has reached the fourth start time, the terminal performs intra-frequency neighbor cell measurement.

In this way, for intra-frequency neighbor cell measurement, because the terminal can perform neighbor cell measurement when the current time reaches the fourth start time, and the fourth start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the fourth start time is determined, in a specific implementation, in a case in which the first time is configured to be the absolute time T1, the third offset is configured to be a time length L3, and the fourth start time is time obtained by subtracting the time length L3 from the absolute time T1, if the current time has reached the time obtained by subtracting the time length L3 from the absolute time T1, it indicates that the current time has reached the fourth start time; or if the current time has not reached the time obtained by subtracting the time length L3 from the absolute time T1, it indicates that the current time has not reached the fourth start time.

In another specific implementation, in a case in which the first time is configured to be the time corresponding to the timer, a length of the time corresponding to the timer is S4, and the third offset is configured to be a time length L3, when the timer has reached time obtained by subtracting the time length L3 from the length of the time corresponding to the timer S4, it indicates that the current time has reached the fourth start time; or when the timer has not reached time obtained by subtracting the time length L3 from the length of the time corresponding to the timer S4, it indicates that the current time has not reached the fourth start time.

For equal or lower priority inter-frequency or lower priority inter-RAT frequency:
The terminal may determine, based on the first time and the fourth offset in the target configuration information, the fifth start time used to indicate to perform equal or lower priority inter-frequency or lower priority inter-RAT frequency neighbor cell measurement, and determine whether a signal status of the serving cell satisfies the second preset condition and current time has reached the fifth start time.

If the signal status of the serving cell satisfies the second preset condition and the current time has not reached the fifth start time, the terminal may skip performing equal or lower priority inter-frequency or lower priority inter-RAT frequency neighbor cell measurement, or if the signal status of the serving cell does not satisfy the second preset condition or the current time has reached the fifth start time, the terminal performs equal or lower priority inter-frequency or lower priority inter-RAT frequency neighbor cell measurement.

Alternatively, if the signal status of the serving cell satisfies the second preset condition or the current time has not reached the fifth start time, the terminal may skip performing equal or lower priority inter-frequency or lower priority inter-RAT frequency neighbor cell measurement, or if the signal status of the serving cell does not satisfy the second preset condition and the current time has reached the fifth start time, the terminal performs equal or lower priority inter-frequency or lower priority inter-RAT frequency neighbor cell measurement.

In this way, for equal or lower priority inter-frequency or lower priority inter-RAT frequency neighbor cell measurement, because the terminal can perform neighbor cell measurement when the current time reaches the fifth start time, and the fifth start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the fifth start time is determined, in a specific implementation, in a case in which the first time is configured to be the absolute time T1, the fourth offset is configured to be a time length L4, and the fifth start time is time obtained by subtracting the time length L4 from the absolute time T1, if the current time has reached the time obtained by subtracting the time length L4 from the absolute time T1, it indicates that the current time has reached the fifth start time; or if the current time has not reached the time obtained by subtracting the time length L4 from the absolute time T1, it indicates that the current time has not reached the fifth start time.

In another specific implementation, in a case in which the first time is configured to be the time corresponding to the timer, a length of the time corresponding to the timer is S5, and the fourth offset is configured to be a time length L4, when the timer has reached time obtained by subtracting the time length L4 from the length of the time corresponding to the timer S5, it indicates that the current time has reached the fifth start time; or when the timer has not reached time obtained by subtracting the time length L4 from the length of the time corresponding to the timer S5, it indicates that the current time has not reached the fifth start time.

In the fourth implementation, the target configuration information may include the foregoing third time, fourth time, fifth time, first threshold, second threshold, third threshold, and fourth threshold. In this case, that the terminal starts neighbor cell measurement based on the target configuration information may include the following steps.

For higher priority inter-frequency or inter-RAT frequency:
The terminal performs higher priority inter-frequency or inter-RAT frequency neighbor cell measurement throughout. In this way, it is ensured that a frequency of a cell providing a communication service for the terminal is of a higher priority, to provide a better communication service for the terminal.

Alternatively, the terminal may determine, based on the third time in the target configuration information, the sixth start time used to indicate to perform higher priority inter-frequency or inter-RAT frequency neighbor cell measurement, and determine whether current time has reached the sixth start time. If the current time has not reached the sixth start time, the terminal may skip performing higher priority inter-frequency or inter-RAT frequency neighbor cell measurement, or if the current time has reached the sixth start time, the terminal performs higher priority inter-frequency or inter-RAT frequency neighbor cell measurement. In this way, for higher priority inter-frequency or inter-RAT frequency neighbor cell measurement, because the terminal can perform neighbor cell measurement when the current time reaches the sixth start time, and the sixth start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the sixth start time is determined, in a specific implementation, in a case in which the third time is configured to be the absolute time T3, if the current time has reached the absolute time T3, it indicates that the current time has reached the sixth start time; or if the current time has not reached the absolute time T3, it indicates that the current time has not reached the sixth start time.

In another specific implementation, in a case in which the third time is configured to be the time corresponding to the timer and a length of the time corresponding to the timer is S6, when the timer has reached the length S6 of the time corresponding to the timer, it indicates that the current time has reached the sixth start time; or when the timer has not reached the length S6 of the time corresponding to the timer, it indicates that the current time has not reached the sixth start time.

For intra-frequency:
The terminal may determine, based on the fourth time in the target configuration information, the seventh start time used to indicate to perform intra-frequency neighbor cell measurement, and determine whether a signal status of the serving cell satisfies the first preset condition and current time has reached the seventh start time.

If the signal status of the serving cell satisfies the first preset condition and the current time has not reached the seventh start time, the terminal may skip performing intra-frequency neighbor cell measurement, or if the signal status of the serving cell does not satisfy the first preset condition or the current time has reached the seventh start time, the terminal performs intra-frequency neighbor cell measurement.

Alternatively, if the signal status of the serving cell satisfies the first preset condition or the current time has not reached the seventh start time, the terminal may skip performing intra-frequency neighbor cell measurement, or if the signal status of the serving cell does not satisfy the first preset condition and the current time has reached the seventh start time, the terminal performs intra-frequency neighbor cell measurement.

In this way, for intra-frequency neighbor cell measurement, because the terminal can perform neighbor cell measurement when the current time reaches the seventh start time, and the seventh start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the seventh start time is determined, in a specific implementation, in a case in which the fourth time is configured to be the absolute time T4, if the current time has reached the absolute time T4, it indicates that the current time has reached the seventh start time; or if the current time has not reached the absolute time T4, it indicates that the current time has not reached the seventh start time.

In another specific implementation, in a case in which the fourth time is configured to be the time corresponding to the timer and a length of the time corresponding to the timer is S7, when the timer has reached the length S7 of the time corresponding to the timer, it indicates that the current time has reached the seventh start time; or when the timer has not reached the length S7 of the time corresponding to the timer, it indicates that the current time has not reached the seventh start time.

For equal or lower priority inter-frequency or lower priority inter-RAT frequency:
The terminal may determine, based on the fifth time in the target configuration information, the eighth start time used to indicate to perform intra-frequency neighbor cell measurement, and determine whether a signal status of the serving cell satisfies the second preset condition and current time has reached the eighth start time.

If the signal status of the serving cell satisfies the second preset condition and the current time has not reached the eighth start time, the terminal may skip performing equal or lower priority inter-frequency or lower priority inter-RAT frequency neighbor cell measurement, or if the signal status of the serving cell does not satisfy the second preset condition or the current time has reached the eighth start time, the terminal performs equal or lower priority inter-frequency or lower priority inter-RAT frequency neighbor cell measurement.

Alternatively, if the signal status of the serving cell satisfies the second preset condition or the current time has not reached the eighth start time, the terminal may skip performing equal or lower priority inter-frequency or lower priority inter-RAT frequency neighbor cell measurement, or if the signal status of the serving cell does not satisfy the second preset condition and the current time has reached the eighth start time, the terminal performs equal or lower priority inter-frequency or lower priority inter-RAT frequency neighbor cell measurement.

In this way, for equal or lower priority inter-frequency or lower priority inter-RAT frequency neighbor cell measurement, because the terminal can perform neighbor cell measurement when the current time reaches the eighth start time, and the eighth start time is before time at which a link switchover occurs, it is ensured that the terminal performs neighbor cell measurement before the link switchover, to avoid a problem of delayed cell reselection and ensure service continuity of the terminal during the link switchover.

When whether the current time has reached the eighth start time is determined, in a specific implementation, in a case in which the fifth time is configured to be the absolute time T5, if the current time has reached the absolute time T5, it indicates that the current time has reached the eighth start time; or if the current time has not reached the absolute time T5, it indicates that the current time has not reached the eighth start time.

In another specific implementation, in a case in which the fifth time is configured to be the time corresponding to the timer and a length of the time corresponding to the timer is S8, when the timer has reached the length S8 of the time corresponding to the timer, it indicates that the current time has reached the eighth start time; or when the timer has not reached the length S8 of the time corresponding to the timer, it indicates that the current time has not reached the eighth start time.

It should be noted that, in the embodiments of this application, an action that the terminal starts neighbor cell measurement may be agreed in a protocol or configured by the network side device. If the action that the terminal starts neighbor cell measurement may be agreed in the protocol, the terminal may perform neighbor cell measurement according to the action agreed in the protocol throughout. If the action of neighbor cell measurement performed by the terminal may be configured by the network side device, the terminal may perform neighbor cell measurement according to the action configured by the network side device.

Optionally, the network side device may further indicate, by using a specific field, the terminal whether to perform neighbor cell measurement according to the action of starting neighbor cell measurement. For example, the network side device may indicate, by using one bit, the terminal whether to perform neighbor cell measurement according to the action of starting neighbor cell measurement. If a value of the bit is 1, it indicates that the terminal needs to perform neighbor cell measurement according to the action of starting neighbor cell measurement. If a value of the bit is 0, it indicates that the terminal may not perform neighbor cell measurement according to the action of starting neighbor cell measurement. Alternatively, if the field exists, it indicates that the terminal needs to perform neighbor cell measurement according to the action of starting neighbor cell measurement; or if the field does not exist, it indicates that the terminal may not perform neighbor cell measurement according to the action of starting neighbor cell measurement.

The method for starting neighbor cell measurement according to this embodiment of this application has been described in detail above with reference to FIG. 2. A method for starting neighbor cell measurement according to another embodiment of this application is described in detail below with reference to FIG. 3.

FIG. 3 is a schematic flowchart of implementing the method for starting neighbor cell measurement according to this embodiment of this application. The method may be applied to a network side device. It can be understood that interaction between a terminal and the network side device described from the perspective of the network side device is the same as that described from the perspective of the network side device in the method shown in FIG. 2. To avoid repetition, related descriptions are appropriately omitted. As shown in FIG. 3, the method 300 includes the following steps.

S302: A network side device sends target configuration information to a terminal, where the target configuration information is used to indicate the terminal to start neighbor cell measurement based on the target configuration information, and the target configuration information includes time information used to indicate the terminal to start neighbor cell measurement.

In a non-terrestrial network, the network side device may send the target configuration information to the terminal through communication with the terminal via a satellite (or an unmanned aerial vehicle), so that the terminal can start neighbor cell measurement based on the target configuration information. The target configuration information may include the time information indicating the terminal to start neighbor cell measurement. Start time for performing neighbor cell measurement that is indicated by the time information is before time at which a link switchover occurs, so that the terminal can start neighbor cell measurement before the link switchover, to avoid a problem of delayed cell reselection and ensure service continuity of the terminal during the link switchover.

In this embodiment of this application, the network side device may send the target configuration information to the terminal in at least one of the following manners: sending the target configuration information to the terminal by using a system broadcast message; sending the target configuration information to the terminal by using dedicated signaling; and sending the target configuration information to the terminal by using a historical message. For a specific implementation, refer to the specific implementation of corresponding steps in the embodiment shown in FIG. 2. Descriptions are not repeated herein.

The target configuration information may include at least one of the following:
(1) First time, where the first time is used to indicate service stop time of a serving cell.
(2) A first offset, where the first time and the first offset are used to indicate first start time for performing neighbor cell measurement.
(3) Second time, where the second time is used to indicate second start time for performing neighbor cell measurement.
(4) A second offset, where the first time and the second offset are used to indicate third start time for performing higher priority inter-frequency or inter-RAT frequency neighbor cell measurement.
(5) A third offset, where the first time and the third offset are used to indicate fourth start time for performing intra-frequency neighbor cell measurement.
(6) A fourth offset, where the first time and the fourth offset are used to indicate fifth start time for performing equal or lower priority inter-frequency or lower priority inter-RAT frequency neighbor cell measurement.
(7) Third time, where the third time is used to indicate sixth start time for performing higher priority inter-frequency or inter-RAT frequency neighbor cell measurement.
(8) Fourth time, where the fourth time is used to indicate seventh start time for performing intra-frequency neighbor cell measurement.
(9) Fifth time, where the fifth time is used to indicate eighth start time for performing equal or lower priority inter-frequency or lower priority inter-RAT frequency neighbor cell measurement.
(10) A first threshold, where the first threshold is used to indicate a signal strength threshold that a serving cell needs to satisfy for starting intra-frequency neighbor cell measurement.
(11) A second threshold, where the second threshold is used to indicate a signal quality threshold that the serving cell needs to satisfy for starting intra-frequency neighbor cell measurement.
(12) A third threshold, where the third threshold is used to indicate a signal strength threshold that the serving cell needs to satisfy for starting equal or lower priority inter-frequency or lower priority inter-RAT frequency neighbor cell measurement.
(13) A fourth offset, where the fourth offset is used to indicate a signal quality threshold that the serving cell needs to satisfy for starting equal or lower priority inter-frequency or lower priority inter-RAT frequency neighbor cell measurement.

For detailed descriptions of the foregoing 13 types of target configuration information, refer to corresponding descriptions in the embodiment shown in FIG. 2. Details are not described herein again.

The terminal may start neighbor cell measurement based on the target configuration information after the network side device sends the target configuration information to the terminal. For a specific implementation in which the terminal starts neighbor cell measurement, refer to corresponding descriptions in the embodiment shown in FIG. 2. Descriptions are not repeated herein. An action that the terminal starts neighbor cell measurement may be agreed in a protocol or configured by the network side device. For details, refer to corresponding descriptions in the embodiment shown in FIG. 2. Descriptions are not repeated herein.

According to the technical solution provided in the embodiments of this application, because the network side device can indicate, by using the target configuration information, the time information indicating the terminal to start neighbor cell measurement to the terminal, the terminal can start neighbor cell measurement based on the target configuration information before a link switchover, that is, perform cell reselection in advance, to avoid a problem of delayed cell reselection performed by the terminal due to the link switchover and ensure service continuity of the terminal during the link switchover.

It should be noted that, the method for starting neighbor cell measurement provided in the embodiments of this application may be performed by an apparatus for starting neighbor cell measurement or a control module that is in the apparatus for starting neighbor cell measurement and that is used for performing the method for starting neighbor cell measurement. In an embodiment of this application, an example in which the method for starting neighbor cell measurement is performed by the apparatus for starting neighbor cell measurement is used to describe the apparatus for starting neighbor cell measurement provided in the embodiments of this application.

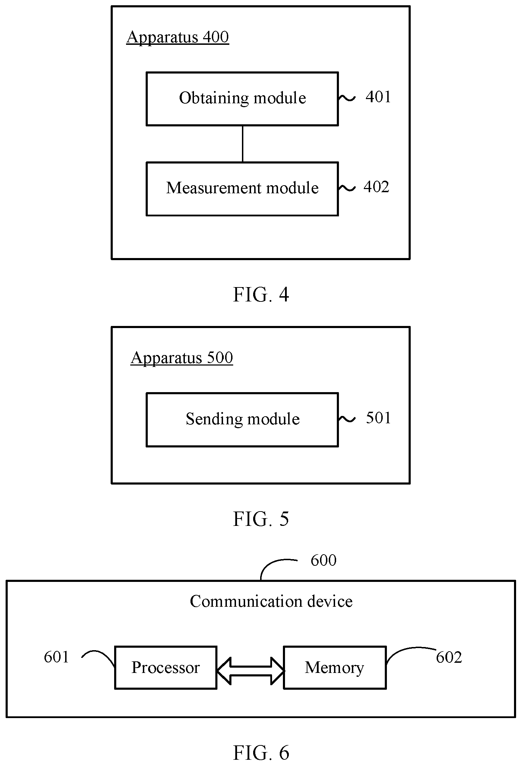

FIG. 4 is a schematic diagram of a structure of an apparatus for starting neighbor cell measurement according to an embodiment of this application. The apparatus may correspond to a terminal in another embodiment. As shown in FIG. 4, an apparatus 400 includes the following modules:
an obtaining module 401, configured to obtain target configuration information, where the target configuration information includes time information used to indicate the terminal to start neighbor cell measurement; and
a measurement module 402, configured to start neighbor cell measurement based on the target configuration information.

Because the time information indicating the terminal to start neighbor cell measurement can be indicated to the terminal by using the target configuration information, the terminal can start neighbor cell measurement based on the target configuration information before a link switchover, to avoid a problem of delayed cell reselection performed by the terminal due to the link switchover and ensure service continuity of the terminal.

Optionally, in an embodiment, the target configuration information includes at least one of the following:
first time, where the first time is used to indicate service stop time of a serving cell;
a first offset, where the first time and the first offset are used to indicate first start time for performing neighbor cell measurement;
second time, where the second time is used to indicate second start time for performing neighbor cell measurement;
a second offset, where the first time and the second offset are used to indicate third start time for performing higher priority inter-frequency or inter-RAT frequency neighbor cell measurement;
a third offset, where the first time and the third offset are used to indicate fourth start time for performing intra-frequency neighbor cell measurement;
a fourth offset, where the first time and the fourth offset are used to indicate fifth start time for performing equal or lower priority inter-frequency or lower priority inter-RAT frequency neighbor cell measurement;
third time, where the third time is used to indicate sixth start time for performing higher priority inter-frequency or inter-RAT frequency neighbor cell measurement;
fourth time, where the fourth time is used to indicate seventh start time for performing intra-frequency neighbor cell measurement;
fifth time, where the fifth time is used to indicate eighth start time for performing equal or lower priority inter-frequency or lower priority inter-RAT frequency neighbor cell measurement;
a first threshold, where the first threshold is used to indicate a signal strength threshold that a serving cell needs to satisfy for starting intra-frequency neighbor cell measurement;
a second threshold, where the second threshold is used to indicate a signal quality threshold that the serving cell needs to satisfy for starting intra-frequency neighbor cell measurement;
a third threshold, where the third threshold is used to indicate a signal strength threshold that the serving cell needs to satisfy for starting equal or lower priority inter-frequency or lower priority inter-RAT frequency neighbor cell measurement; and
a fourth offset, where the fourth offset is used to indicate a signal quality threshold that the serving cell needs to satisfy for starting equal or lower priority inter-frequency or lower priority inter-RAT frequency neighbor cell measurement.

Optionally, in an embodiment, the measurement module 402 is configured to perform at least one of the following:
for higher priority inter-frequency or inter-RAT frequency neighbor cell measurement, the measurement module 402 is configured to:
perform higher priority inter-frequency or inter-RAT frequency neighbor cell measurement throughout; or
if current time has not reached the first start time, skip performing higher priority inter-frequency or inter-RAT frequency neighbor cell measurement, or if current time has reached the first start time, perform higher priority inter-frequency or inter-RAT frequency neighbor cell measurement;
for intra-frequency, the measurement module 402 is configured to:
   if a signal status of the serving cell satisfies a first preset condition and current time has not reached the first start time, skip performing intra-frequency neighbor cell measurement, or if a signal status of the serving cell does not satisfy a first preset condition or current time has reached the first start time, perform intra-frequency neighbor cell measurement; or
   if a signal status of the serving cell satisfies a first preset condition or current time has not reached the first start time, skip performing intra-frequency neighbor cell measurement if a signal status of the serving cell does not satisfy a first preset condition and current time has reached the first start time, perform intra-frequency neighbor cell measurement, where
   the first preset condition includes that signal strength is greater than the first threshold and signal quality is higher than the second threshold; and
   for equal or lower priority inter-frequency or lower priority inter-RAT frequency, the measurement module 402 is configured to:
      if a signal status of the serving cell satisfies a second preset condition and current time has not reached the first start time, skip performing equal or lower priority inter-frequency or lower priority inter-RAT frequency neighbor cell measurement, or if a signal status of the serving cell does not satisfy a second preset condition or current time has reached the first start time, perform equal or lower priority inter-frequency or lower priority inter-RAT frequency neighbor cell measurement; or
      if a signal status of the serving cell satisfies a second preset condition or current time has not reached the first start time, skip performing equal or lower priority inter-frequency or lower priority inter-RAT frequency neighbor cell measurement, or if a signal status of the serving cell does not satisfy a second preset condition and current time has reached the first start time, perform equal or lower priority inter-frequency or lower priority inter-RAT frequency neighbor cell measurement, where
      the second preset condition includes that signal strength is greater than the third threshold and signal quality is higher than the fourth threshold.

Optionally, in an embodiment, the measurement module 402 is configured to perform at least one of the following:
for higher priority inter-frequency or inter-RAT frequency neighbor cell measurement, the measurement module 402 is configured to:
perform higher priority inter-frequency or inter-RAT frequency neighbor cell measurement throughout; or
if current time has not reached the second start time, skip performing higher priority inter-frequency or inter-RAT frequency neighbor cell measurement, or if current time has reached the second start time, perform higher priority inter-frequency or inter-RAT frequency neighbor cell measurement;
for intra-frequency, the measurement module 402 is configured to:
   if a signal status of the serving cell satisfies a first preset condition and current time has not reached the second start time, skip performing intra-frequency neighbor cell measurement, or if a signal status of the serving cell does not satisfy a first preset condition or current time has reached the second start time, perform intra-frequency neighbor cell measurement; or
   if a signal status of the serving cell satisfies a first preset condition or current time has not reached the second start time, skip performing intra-frequency neighbor cell measurement if a signal status of the serving cell does not satisfy a first preset condition and current time has reached the second start time, perform intra-frequency neighbor cell measurement, where
   the first preset condition includes that signal strength is greater than the first threshold and signal quality is higher than the second threshold; and
   for equal or lower priority inter-frequency or lower priority inter-RAT frequency, the measurement module 402 is configured to:
      if a signal status of the serving cell satisfies a second preset condition and current time has not reached the second start time, skip performing equal or lower priority inter-frequency or lower priority inter-RAT frequency neighbor cell measurement, or if a signal status of the serving cell does not satisfy a second preset condition or current time has reached the second start time, perform equal or lower priority inter-frequency or lower priority inter-RAT frequency neighbor cell measurement; or
      if a signal status of the serving cell satisfies a second preset condition or current time has not reached the second start time, skip performing equal or lower priority inter-frequency or lower priority inter-RAT frequency neighbor cell measurement, or if a signal status of the serving cell does not satisfy a second preset condition and current time has reached the second start time, perform equal or lower priority inter-frequency or lower priority inter-RAT frequency neighbor cell measurement, where
      the second preset condition includes that signal strength is greater than the third threshold and signal quality is higher than the fourth threshold.

Optionally, in an embodiment, the measurement module 402 is configured to perform at least one of the following:
for higher priority inter-frequency or inter-RAT frequency neighbor cell measurement, the measurement module 402 is configured to:
perform higher priority inter-frequency or inter-RAT frequency neighbor cell measurement throughout; or
if current time has not reached the third start time, skip performing higher priority inter-frequency or inter-RAT frequency neighbor cell measurement, or if current time has reached the third start time, perform higher priority inter-frequency or inter-RAT frequency neighbor cell measurement;
for intra-frequency, the measurement module 402 is configured to:
   if a signal status of the serving cell satisfies a first preset condition and current time has not reached the fourth start time, skip performing intra-frequency neighbor cell measurement, or if a signal status of the serving cell does not satisfy a first preset condition or current time has reached the fourth start time, perform intra-frequency neighbor cell measurement; or
   if a signal status of the serving cell satisfies a first preset condition or current time has not reached the fourth start time, skip performing intra-frequency neighbor cell measurement if a signal status of the serving cell does not satisfy a first preset condition and current time has reached the fourth start time, perform intra-frequency neighbor cell measurement, where
   the first preset condition includes that signal strength is greater than the first threshold and signal quality is higher than the second threshold; and
   for equal or lower priority inter-frequency or lower priority inter-RAT frequency, the measurement module 402 is configured to:
      if a signal status of the serving cell satisfies a second preset condition and current time has not reached the fifth start time, skip performing equal or lower priority inter-frequency or lower priority inter-RAT frequency neighbor cell measurement, or if a signal status of the serving cell does not satisfy a second preset condition or current time has reached the fifth start time, perform equal or lower priority inter-frequency or lower priority inter-RAT frequency neighbor cell measurement; or
      if a signal status of the serving cell satisfies a second preset condition or current time has not reached the fifth start time, skip performing equal or lower priority inter-frequency or lower priority inter-RAT frequency neighbor cell measurement, or if a signal status of the serving cell does not satisfy a second preset condition and current time has reached the fifth start time, perform equal or lower priority inter-frequency or lower priority inter-RAT frequency neighbor cell measurement, where
      the second preset condition includes that signal strength is greater than the third threshold and signal quality is higher than the fourth threshold.

Optionally, in an embodiment, the measurement module 402 is configured to perform at least one of the following:
for higher priority inter-frequency or inter-RAT frequency neighbor cell measurement, the measurement module 402 is configured to:
perform higher priority inter-frequency or inter-RAT frequency neighbor cell measurement throughout; or
if current time has not reached the sixth start time, skip performing higher priority inter-frequency or inter-RAT frequency neighbor cell measurement, or if current time has reached the sixth start time, perform higher priority inter-frequency or inter-RAT frequency neighbor cell measurement;
for intra-frequency, the measurement module 402 is configured to:
   if a signal status of the serving cell satisfies a first preset condition and current time has not reached the seventh start time, skip performing intra-frequency neighbor cell measurement, or if a signal status of the serving cell does not satisfy a first preset condition or current time has reached the seventh start time, perform intra-frequency neighbor cell measurement; or
   if a signal status of the serving cell satisfies a first preset condition or current time has not reached the seventh start time, skip performing intra-frequency neighbor cell measurement if a signal status of the serving cell does not satisfy a first preset condition and current time has reached the seventh start time, perform intra-frequency neighbor cell measurement, where
   the first preset condition includes that signal strength is greater than the first threshold and signal quality is higher than the second threshold; and
   for equal or lower priority inter-frequency or lower priority inter-RAT frequency, the measurement module 402 is configured to:
      if a signal status of the serving cell satisfies a second preset condition and current time has not reached the eighth start time, skip performing equal or lower priority inter-frequency or lower priority inter-RAT frequency neighbor cell measurement, or if a signal status of the serving cell does not satisfy a second preset condition or current time has reached the eighth start time, perform equal or lower priority inter-frequency or lower priority inter-RAT frequency neighbor cell measurement; or
      if a signal status of the serving cell satisfies a second preset condition or current time has not reached the eighth start time, skip performing equal or lower priority inter-frequency or lower priority inter-RAT frequency neighbor cell measurement, or if a signal status of the serving cell does not satisfy a second preset condition and current time has reached the eighth start time, perform equal or lower priority inter-frequency or lower priority inter-RAT frequency neighbor cell measurement, where
      the second preset condition includes that signal strength is greater than the third threshold and signal quality is higher than the fourth threshold.

Optionally, in an embodiment, the obtaining module 401 is configured to perform at least one of the following:
obtaining the target configuration information by using a system broadcast message;
obtaining the target configuration information by using dedicated signaling; and
obtaining the target configuration information by using a historically received message.

Optionally, in an embodiment, an action of starting neighbor cell measurement is agreed in a protocol or configured by a network side device.

The apparatus 400 according to this embodiment of this application may correspond to the procedures of the method 200 in the embodiments of this application, and the units/modules in the apparatus 400 and the foregoing operations and/or functions are respectively for implementing the corresponding procedures of the method 200 and can achieve same or equivalent technical effect. For brevity, details are not described herein again.

FIG. 5 is a schematic diagram of a structure of an apparatus for starting neighbor cell measurement according to an embodiment of this application. The apparatus may correspond to a network side device in another embodiment. As shown in FIG. 5, an apparatus 500 includes the following module:
a sending module 501, configured to send target configuration information to a terminal, where the target configuration information is used to indicate the terminal to start neighbor cell measurement based on the target configuration information, and the target configuration information includes time information used to indicate the terminal to start neighbor cell measurement.

Because the time information indicating the terminal to start neighbor cell measurement can be indicated to the terminal by using the target configuration information, the terminal can start neighbor cell measurement based on the target configuration information before a link switchover, to avoid a problem of delayed cell reselection performed by the terminal due to the link switchover and ensure service continuity of the terminal.

Optionally, in an embodiment, the target configuration information includes at least one of the following:
first time, where the first time is used to indicate service stop time of a serving cell;
a first offset, where the first time and the first offset are used to indicate first start time for performing neighbor cell measurement;
second time, where the second time is used to indicate second start time for performing neighbor cell measurement;
a second offset, where the first time and the second offset are used to indicate third start time for performing higher priority inter-frequency or inter-RAT frequency neighbor cell measurement;
a third offset, where the first time and the third offset are used to indicate fourth start time for performing intra-frequency neighbor cell measurement;
a fourth offset, where the first time and the fourth offset are used to indicate fifth start time for performing equal or lower priority inter-frequency or lower priority inter-RAT frequency neighbor cell measurement;
third time, where the third time is used to indicate sixth start time for performing higher priority inter-frequency or inter-RAT frequency neighbor cell measurement;
fourth time, where the fourth time is used to indicate seventh start time for performing intra-frequency neighbor cell measurement;
fifth time, where the fifth time is used to indicate eighth start time for performing equal or lower priority inter-frequency or lower priority inter-RAT frequency neighbor cell measurement;
a first threshold, where the first threshold is used to indicate a signal strength threshold that a serving cell needs to satisfy for starting intra-frequency neighbor cell measurement;
a second threshold, where the second threshold is used to indicate a signal quality threshold that the serving cell needs to satisfy for starting intra-frequency neighbor cell measurement;
a third threshold, where the third threshold is used to indicate a signal strength threshold that the serving cell needs to satisfy for starting equal or lower priority inter-frequency or lower priority inter-RAT frequency neighbor cell measurement; and
a fourth offset, where the fourth offset is used to indicate a signal quality threshold that the serving cell needs to satisfy for starting equal or lower priority inter-frequency or lower priority inter-RAT frequency neighbor cell measurement.

Optionally, in an embodiment, the sending module 501 is configured to perform at least one of the following:
sending the target configuration information to the terminal by using a system broadcast message;
sending the target configuration information to the terminal by using dedicated signaling; and
sending the target configuration information to the terminal by using a historically received message.

Optionally, in an embodiment, an action that the terminal starts neighbor cell measurement is agreed in a protocol or configured by a network side device.

The apparatus 500 according to this embodiment of this application may correspond to the procedures of the method 300 in the embodiments of this application, and the units/modules in the apparatus 500 and the foregoing operations and/or functions are respectively for implementing the corresponding procedures of the method 300 and can achieve same or equivalent technical effect. For brevity, details are not described herein again.

The apparatus for starting neighbor cell measurement in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include, but is not limited to, a type of the terminal 11 listed above. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The apparatus for starting neighbor cell measurement provided in this embodiment of this application can implement the processes implemented in the method embodiment in FIG. 2 and FIG. 3, and same technical effect can be achieved. To avoid repetition, details are not described herein again.

Optionally, as shown in FIG. 6, an embodiment of this application further provides a communication device 600, including a processor 601, a memory 602, a program or an instruction that is stored in the memory 602 and that is executable on the processor 601. For example, when the communication device 600 is a terminal, the program or the instruction is executed by the processor 601 to implement the processes in the foregoing embodiment of the method 200, and same technical effect can be achieved. When the communication device 600 is a network side device, when the program or the instruction is executed by the processor 601, the processes in the foregoing embodiment of the method 300 are implemented, and same technical effect is achieved. To avoid repetition, details are not described herein again.

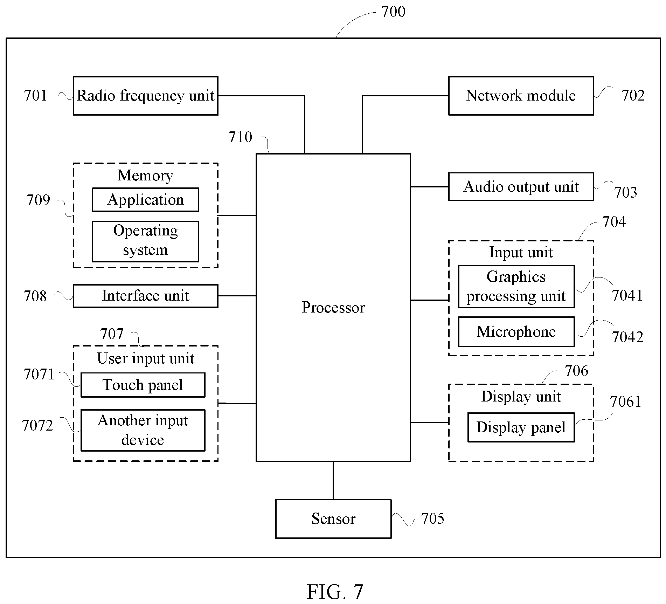

An embodiment of this application further provides a terminal, including a processor and a communication interface. The communication interface is configured to obtain target configuration information, where the target configuration information includes time information used to indicate the terminal to start neighbor cell measurement. The processor is configured to start neighbor cell measurement based on the target configuration information. This terminal embodiment corresponds to the foregoing method embodiment on the terminal side. Each implementation process and implementation of the foregoing method embodiment may be applicable to this terminal embodiment, and same technical effect can be achieved. Specifically, FIG. 7 is a schematic diagram of a hardware structure of a terminal according to an embodiment of this application.

A terminal 700 includes but is not limited to at least a part of components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (such as a battery) that supplies power to each component. The power supply may be logically connected to the processor 710 by using a power supply management system, to implement functions such as charging and discharging management, and power consumption management by using the power supply management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 704 may include a graphics processing unit (Graphics Processing Unit, GPU) 7041 and a microphone 7042, and the graphics processing unit 7041 processes image data of a still picture or a video obtained by an image capture apparatus (such as a camera) in a video capture mode or an image capture mode. The display unit 706 may include a display panel 7061. Optionally, the display panel 7061 may be configured in a form such as a liquid crystal display or an organic light-emitting diode. The user input unit 707 includes a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional button (such as a volume control button or a power on/off button), a trackball, a mouse, and a joystick. Details are not described herein.

In this embodiment of this application, the radio frequency unit 701 receives downlink data from a network side device and then sends the downlink data to the processor 710 for processing; and sends uplink data to the network side device. Usually, the radio frequency unit 701 includes but is not limited to an antenna, at least one amplifier, a transceiver, a coupler, a low noise amplifier, a duplexer, and the like.

The memory 709 may be configured to store a software program or an instruction and various data. The memory 709 may mainly include a program or instruction storage area and a data storage area. The program or instruction storage area may store an operating system, and an application or an instruction required by at least one function (for example, a sound play function or an image display function). In addition, the memory 709 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 710 may include one or more processing units. Optionally, an application processor and a modem processor may be integrated into the processor 710. The application processor mainly processes an operating system, a user interface, an application, an instruction, or the like. The modem processor mainly processes wireless communication, for example, a baseband processor. It can be understood that, alternatively, the modem processor may not be integrated into the processor 710.

The radio frequency unit 701 is configured to obtain target configuration information, where the target configuration information includes time information used to indicate the terminal to start neighbor cell measurement.

The processor 710 is configured to start neighbor cell measurement based on the target configuration information.

Because the time information indicating the terminal to start neighbor cell measurement can be indicated to the terminal by using the target configuration information, the terminal can start neighbor cell measurement based on the target configuration information before a link switchover, to avoid a problem of delayed cell reselection performed by the terminal due to the link switchover and ensure service continuity of the terminal.

The terminal 700 provided in this embodiment of this application can implement the processes in the embodiment of the method for starting neighbor cell measurement, and same technical effect can be achieved. To avoid repetition, details are not described herein again.

An embodiment of this application further provides a network side device, including a processor and a communication interface. The communication interface is configured to send target configuration information to a terminal, where the target configuration information is used to indicate the terminal to start neighbor cell measurement based on the target configuration information, and the target configuration information includes time information used to indicate the terminal to start neighbor cell measurement. This network side device embodiment corresponds to the foregoing method embodiment on the network side device. Each implementation process and implementation of the foregoing method embodiment may be applicable to this network side device embodiment, and same technical effect can be achieved.

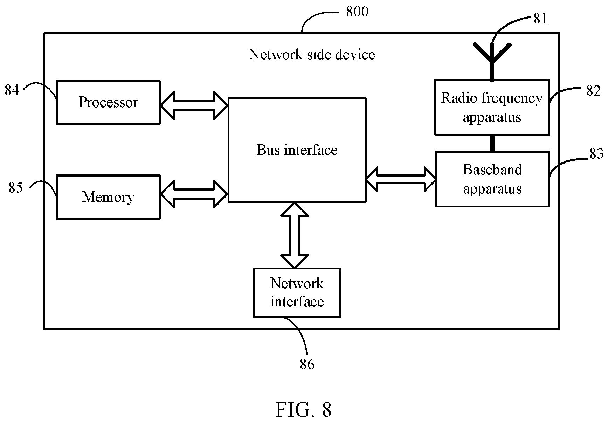

Specifically, an embodiment of this application further provides a network side device. As shown in FIG. 8, a network device 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes information that needs to be sent, and sends processed information to the radio frequency apparatus 82. The radio frequency apparatus 82 processes the received information, and sends processed information by using the antenna 81.

The frequency band processing apparatus may be located in the baseband apparatus 83. The method performed by the network side device in the foregoing embodiment may be implemented in the baseband apparatus 83. The baseband apparatus 83 includes a processor 84 and a memory 85.

The baseband apparatus 83 may include, for example, at least one baseband board, where a plurality of chips are disposed on the baseband board. As shown in FIG. 8, one chip is, for example, the processor 84, which is connected to the memory 85, so as to invoke a program in the memory 85 to perform operations of the network device shown in the foregoing method embodiment.

The baseband apparatus 83 may further include a network interface 86, configured to exchange information with the radio frequency apparatus 82. For example, the interface is a common public radio interface (common public radio interface, CPRI for short).

Specifically, the network side device in this embodiment of the present invention further includes an instruction or a program that is stored in the memory 85 and that can be run on the processor 84. The processor 84 invokes the instruction or the program in the memory 85 to perform the method performed by the modules shown in FIG. 3, and same technical effect is achieved. To avoid repetition, details are not described herein again.

An embodiment of this application further provides a readable storage medium. The readable storage medium stores a program or an instruction. When the program or the instruction is executed by a processor, the processes in the foregoing embodiment of the method for starting neighbor cell measurement are implemented, and same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, and the communication interface is coupled to the processor. The processor is configured to run a program or an instruction, to implement the processes in the foregoing embodiment of the method for starting neighbor cell measurement, and same technical effect can be achieved. To avoid repetition, details are not described herein again.

It should be understood that the chip mentioned in this embodiment of this application may also be referred to as a system-level chip, a system on chip, a chip system, or an on-chip system chip.

An embodiment of this application further provides a computer program/program product. The computer program/program product is stored in a non-volatile storage medium, and the computer program/program product is executed by at least one processor to implement the processes in the foregoing embodiment of the method for starting neighbor cell measurement, and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed order, and may further include performing functions in a roughly simultaneous manner or in a reverse order according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A method for starting neighbor cell measurement, comprising:
obtaining, by a terminal, target configuration information, wherein the target configuration information comprises time information used to indicate the terminal to start neighbor cell measurement; and
starting neighbor cell measurement based on the target configuration information.

2. The method according to claim 1, wherein the target configuration information comprises at least one of the following:
first time, wherein the first time is used to indicate service stop time of a serving cell;
a first offset, wherein the first time and the first offset are used to indicate first start time for performing neighbor cell measurement;
second time, wherein the second time is used to indicate second start time for performing neighbor cell measurement;
a second offset, wherein the first time and the second offset are used to indicate third start time for performing higher priority inter-frequency or inter-RAT frequency neighbor cell measurement;
a third offset, wherein the first time and the third offset are used to indicate fourth start time for performing intra-frequency neighbor cell measurement;
a fourth offset, wherein the first time and the fourth offset are used to indicate fifth start time for performing equal or lower priority inter-frequency or lower priority inter-RAT frequency neighbor cell measurement;
third time, wherein the third time is used to indicate sixth start time for performing higher priority inter-frequency or inter-RAT frequency neighbor cell measurement;
fourth time, wherein the fourth time is used to indicate seventh start time for performing intra-frequency neighbor cell measurement;
fifth time, wherein the fifth time is used to indicate eighth start time for performing equal or lower priority inter-frequency or lower priority inter-RAT frequency neighbor cell measurement;
a first threshold, wherein the first threshold is used to indicate a signal strength threshold that a serving cell needs to satisfy for starting intra-frequency neighbor cell measurement;
a second threshold, wherein the second threshold is used to indicate a signal quality threshold that the serving cell needs to satisfy for starting intra-frequency neighbor cell measurement;
a third threshold, wherein the third threshold is used to indicate a signal strength threshold that the serving cell needs to satisfy for starting equal or lower priority inter-frequency or lower priority inter-RAT frequency neighbor cell measurement; and
a fourth offset, wherein the fourth offset is used to indicate a signal quality threshold that the serving cell needs to satisfy for starting equal or lower priority inter-frequency or lower priority inter-RAT frequency neighbor cell measurement.

3. The method according to claim 2, wherein the starting neighbor cell measurement based on the target configuration information comprises at least one of the following:
for higher priority inter-frequency or inter-RAT frequency neighbor cell measurement, the starting neighbor cell measurement based on the target configuration information comprises:
performing higher priority inter-frequency or inter-RAT frequency neighbor cell measurement throughout; or
if current time has not reached the first start time, skipping performing higher priority inter-frequency or inter-RAT frequency neighbor cell measurement, or if current time has reached the first start time, performing higher priority inter-frequency or inter-RAT frequency neighbor cell measurement;
for intra-frequency, the starting neighbor cell measurement based on the target configuration information comprises:
if a signal status of the serving cell satisfies a first preset condition and current time has not reached the first start time, skipping performing intra-frequency neighbor cell measurement, or if a signal status of the serving cell does not satisfy a first preset condition or current time has reached the first start time, performing intra-frequency neighbor cell measurement; or
if a signal status of the serving cell satisfies a first preset condition or current time has not reached the first start time, skipping performing intra-frequency neighbor cell measurement if a signal status of the serving cell does not satisfy a first preset condition and current time has reached the first start time, performing intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the starting neighbor cell measurement based on the target configuration information comprises:
if a signal status of the serving cell satisfies a second preset condition and current time has not reached the first start time, skipping performing equal or lower priority inter-frequency or lower priority inter-RAT frequency neighbor cell measurement, or if a signal status of the serving cell does not satisfy a second preset condition or current time has reached the first start time, performing equal or lower priority inter-frequency or lower priority inter-RAT frequency neighbor cell measurement; or
if a signal status of the serving cell satisfies a second preset condition or current time has not reached the first start time, skipping performing equal or lower priority inter-frequency or lower priority inter-RAT frequency neighbor cell measurement, or if a signal status of the serving cell does not satisfy a second preset condition and current time has reached the first start time, performing equal or lower priority inter-frequency or lower priority inter-RAT frequency neighbor cell measurement, wherein
the second preset condition comprises that signal strength is greater than the third threshold and signal quality is higher than the fourth threshold.

4. The method according to claim 2, wherein the starting neighbor cell measurement based on the target configuration information further comprises at least one of the following:
for higher priority inter-frequency or inter-RAT frequency neighbor cell measurement, the starting neighbor cell measurement based on the target configuration information comprises:
performing higher priority inter-frequency or inter-RAT frequency neighbor cell measurement throughout; or
if current time has not reached the second start time, skipping performing higher priority inter-frequency or inter-RAT frequency neighbor cell measurement, or if current time has reached the second start time, performing higher priority inter-frequency or inter-RAT frequency neighbor cell measurement;
for intra-frequency, the starting neighbor cell measurement based on the target configuration information comprises:
if a signal status of the serving cell satisfies a first preset condition and current time has not reached the second start time, skipping performing intra-frequency neighbor cell measurement, or if a signal status of the serving cell does not satisfy a first preset condition or current time has reached the second start time, performing intra-frequency neighbor cell measurement; or
if a signal status of the serving cell satisfies a first preset condition or current time has not reached the second start time, skipping performing intra-frequency neighbor cell measurement if a signal status of the serving cell does not satisfy a first preset condition and current time has reached the second start time, performing intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the starting neighbor cell measurement based on the target configuration information comprises:
if a signal status of the serving cell satisfies a second preset condition and current time has not reached the second start time, skipping performing equal or lower priority inter-frequency or lower priority inter-RAT frequency neighbor cell measurement, or if a signal status of the serving cell does not satisfy a second preset condition or current time has reached the second start time, performing equal or lower priority inter-frequency or lower priority inter-RAT frequency neighbor cell measurement; or
if a signal status of the serving cell satisfies a second preset condition or current time has not reached the second start time, skipping performing equal or lower priority inter-frequency or lower priority inter-RAT frequency neighbor cell measurement, or if a signal status of the serving cell does not satisfy a second preset condition and current time has reached the second start time, performing equal or lower priority inter-frequency or lower priority inter-RAT frequency neighbor cell measurement, wherein
the second preset condition comprises that signal strength is greater than the third threshold and signal quality is higher than the fourth threshold.

5. The method according to claim 2, wherein the starting neighbor cell measurement based on the target configuration information comprises at least one of the following:
for higher priority inter-frequency or inter-RAT frequency neighbor cell measurement, the starting neighbor cell measurement based on the target configuration information comprises:
performing higher priority inter-frequency or inter-RAT frequency neighbor cell measurement throughout; or
if current time has not reached the third start time, skipping performing higher priority inter-frequency or inter-RAT frequency neighbor cell measurement, or if current time has reached the third start time, performing higher priority inter-frequency or inter-RAT frequency neighbor cell measurement;
for intra-frequency, the starting neighbor cell measurement based on the target configuration information comprises:
if a signal status of the serving cell satisfies a first preset condition and current time has not reached the fourth start time, skipping performing intra-frequency neighbor cell measurement, or if a signal status of the serving cell does not satisfy a first preset condition or current time has reached the fourth start time, performing intra-frequency neighbor cell measurement; or
if a signal status of the serving cell satisfies a first preset condition or current time has not reached the fourth start time, skipping performing intra-frequency neighbor cell measurement if a signal status of the serving cell does not satisfy a first preset condition and current time has reached the fourth start time, performing intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the starting neighbor cell measurement based on the target configuration information comprises:
if a signal status of the serving cell satisfies a second preset condition and current time has not reached the fifth start time, skipping performing equal or lower priority inter-frequency or lower priority inter-RAT frequency neighbor cell measurement, or if a signal status of the serving cell does not satisfy a second preset condition or current time has reached the fifth start time, performing equal or lower priority inter-frequency or lower priority inter-RAT frequency neighbor cell measurement; or
if a signal status of the serving cell satisfies a second preset condition or current time has not reached the fifth start time, skipping performing equal or lower priority inter-frequency or lower priority inter-RAT frequency neighbor cell measurement, or if a signal status of the serving cell does not satisfy a second preset condition and current time has reached the fifth start time, performing equal or lower priority inter-frequency or lower priority inter-RAT frequency neighbor cell measurement, wherein
the second preset condition comprises that signal strength is greater than the third threshold and signal quality is higher than the fourth threshold.

6. The method according to claim 2, wherein the starting neighbor cell measurement based on the target configuration information comprises at least one of the following:
for higher priority inter-frequency or inter-RAT frequency neighbor cell measurement, the starting neighbor cell measurement based on the target configuration information comprises:
performing higher priority inter-frequency or inter-RAT frequency neighbor cell measurement throughout; or
if current time has not reached the sixth start time, skipping performing higher priority inter-frequency or inter-RAT frequency neighbor cell measurement, or if current time has reached the sixth start time, performing higher priority inter-frequency or inter-RAT frequency neighbor cell measurement;
for intra-frequency, the starting neighbor cell measurement based on the target configuration information comprises:
if a signal status of the serving cell satisfies a first preset condition and current time has not reached the seventh start time, skipping performing intra-frequency neighbor cell measurement, or if a signal status of the serving cell does not satisfy a first preset condition or current time has reached the seventh start time, performing intra-frequency neighbor cell measurement; or
if a signal status of the serving cell satisfies a first preset condition or current time has not reached the seventh start time, skipping performing intra-frequency neighbor cell measurement if a signal status of the serving cell does not satisfy a first preset condition and current time has reached the seventh start time, performing intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the starting neighbor cell measurement based on the target configuration information comprises:
if a signal status of the serving cell satisfies a second preset condition and current time has not reached the eighth start time, skipping performing equal or lower priority inter-frequency or lower priority inter-RAT frequency neighbor cell measurement, or if a signal status of the serving cell does not satisfy a second preset condition or current time has reached the eighth start time, performing equal or lower priority inter-frequency or lower priority inter-RAT frequency neighbor cell measurement; or
if a signal status of the serving cell satisfies a second preset condition or current time has not reached the eighth start time, skipping performing equal or lower priority inter-frequency or lower priority inter-RAT frequency neighbor cell measurement, or if a signal status of the serving cell does not satisfy a second preset condition and current time has reached the eighth start time, performing equal or lower priority inter-frequency or lower priority inter-RAT frequency neighbor cell measurement, wherein
the second preset condition comprises that signal strength is greater than the third threshold and signal quality is higher than the fourth threshold.

7. The method according to claim 1, wherein the obtaining, by a terminal, target configuration information comprises at least one of the following:
obtaining the target configuration information by using a system broadcast message;
obtaining the target configuration information by using dedicated signaling; and
obtaining the target configuration information by using a historically received message.

8. The method according to claim 1, wherein an action of starting neighbor cell measurement is agreed in a protocol or configured by a network side device.

9. A method for starting neighbor cell measurement, comprising:
sending, by a network side device to a terminal, target configuration information, wherein the target configuration information is used to indicate the terminal to start neighbor cell measurement based on the target configuration information, and the target configuration information comprises time information used to indicate the terminal to start neighbor cell measurement.

10. The method according to claim 9, wherein the target configuration information comprises at least one of the following:
first time, wherein the first time is used to indicate service stop time of a serving cell;
a first offset, wherein the first time and the first offset are used to indicate first start time for performing neighbor cell measurement;
second time, wherein the second time is used to indicate second start time for performing neighbor cell measurement;
a second offset, wherein the first time and the second offset are used to indicate third start time for performing higher priority inter-frequency or inter-RAT frequency neighbor cell measurement;
a third offset, wherein the first time and the third offset are used to indicate fourth start time for performing intra-frequency neighbor cell measurement;
a fourth offset, wherein the first time and the fourth offset are used to indicate fifth start time for performing equal or lower priority inter-frequency or lower priority inter-RAT frequency neighbor cell measurement;
third time, wherein the third time is used to indicate sixth start time for performing higher priority inter-frequency or inter-RAT frequency neighbor cell measurement;
fourth time, wherein the fourth time is used to indicate seventh start time for performing intra-frequency neighbor cell measurement;
fifth time, wherein the fifth time is used to indicate eighth start time for performing equal or lower priority inter-frequency or lower priority inter-RAT frequency neighbor cell measurement;
a first threshold, wherein the first threshold is used to indicate a signal strength threshold that a serving cell needs to satisfy for starting intra-frequency neighbor cell measurement;
a second threshold, wherein the second threshold is used to indicate a signal quality threshold that the serving cell needs to satisfy for starting intra-frequency neighbor cell measurement;
a third threshold, wherein the third threshold is used to indicate a signal strength threshold that the serving cell needs to satisfy for starting equal or lower priority inter-frequency or lower priority inter-RAT frequency neighbor cell measurement; and
a fourth offset, wherein the fourth offset is used to indicate a signal quality threshold that the serving cell needs to satisfy for starting equal or lower priority inter-frequency or lower priority inter-RAT frequency neighbor cell measurement.

11. The method according to claim 9, wherein the sending, by a network side device to a terminal, target configuration information comprises at least one of the following:
sending the target configuration information to the terminal by using a system broadcast message;
sending the target configuration information to the terminal by using dedicated signaling; and
sending the target configuration information to the terminal by using a historically received message.

12. The method according to claim 9, wherein an action that the terminal starts neighbor cell measurement is agreed in a protocol or configured by a network side device.

13. An apparatus for starting neighbor cell measurement, comprising:
an obtaining module, configured to obtain target configuration information, wherein the target configuration information comprises time information used to indicate the terminal to start neighbor cell measurement; and
a measurement module, configured to start neighbor cell measurement based on the target configuration information.

14. The apparatus according to claim 13, wherein the target configuration information comprises at least one of the following:
first time, wherein the first time is used to indicate service stop time of a serving cell;
a first offset, wherein the first time and the first offset are used to indicate first start time for performing neighbor cell measurement;
second time, wherein the second time is used to indicate second start time for performing neighbor cell measurement;
a second offset, wherein the first time and the second offset are used to indicate third start time for performing higher priority inter-frequency or inter-RAT frequency neighbor cell measurement;
a third offset, wherein the first time and the third offset are used to indicate fourth start time for performing intra-frequency neighbor cell measurement;
a fourth offset, wherein the first time and the fourth offset are used to indicate fifth start time for performing equal or lower priority inter-frequency or lower priority inter-RAT frequency neighbor cell measurement;
third time, wherein the third time is used to indicate sixth start time for performing higher priority inter-frequency or inter-RAT frequency neighbor cell measurement;
fourth time, wherein the fourth time is used to indicate seventh start time for performing intra-frequency neighbor cell measurement;
fifth time, wherein the fifth time is used to indicate eighth start time for performing equal or lower priority inter-frequency or lower priority inter-RAT frequency neighbor cell measurement;
a first threshold, wherein the first threshold is used to indicate a signal strength threshold that a serving cell needs to satisfy for starting intra-frequency neighbor cell measurement;
a second threshold, wherein the second threshold is used to indicate a signal quality threshold that the serving cell needs to satisfy for starting intra-frequency neighbor cell measurement;
a third threshold, wherein the third threshold is used to indicate a signal strength threshold that the serving cell needs to satisfy for starting equal or lower priority inter-frequency or lower priority inter-RAT frequency neighbor cell measurement; and
a fourth offset, wherein the fourth offset is used to indicate a signal quality threshold that the serving cell needs to satisfy for starting equal or lower priority inter-frequency or lower priority inter-RAT frequency neighbor cell measurement.

15. The apparatus according to claim 14, wherein the measurement module is configured for at least one of the following:
for higher priority inter-frequency or inter-RAT frequency neighbor cell measurement, the measurement module is configured to:
perform higher priority inter-frequency or inter-RAT frequency neighbor cell measurement throughout; or
if current time has not reached the first start time, skip performing higher priority inter-frequency or inter-RAT frequency neighbor cell measurement, or if current time has reached the first start time, perform higher priority inter-frequency or inter-RAT frequency neighbor cell measurement;
for intra-frequency, the measurement module is configured to:
if a signal status of the serving cell satisfies a first preset condition and current time has not reached the first start time, skip performing intra-frequency neighbor cell measurement, or if a signal status of the serving cell does not satisfy a first preset condition or current time has reached the first start time, perform intra-frequency neighbor cell measurement; or
if a signal status of the serving cell satisfies a first preset condition or current time has not reached the first start time, skip performing intra-frequency neighbor cell measurement if a signal status of the serving cell does not satisfy a first preset condition and current time has reached the first start time, perform intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the measurement module is configured to:
if a signal status of the serving cell satisfies a second preset condition and current time has not reached the first start time, skip performing equal or lower priority inter-frequency or lower priority inter-RAT frequency neighbor cell measurement, or if a signal status of the serving cell does not satisfy a second preset condition or current time has reached the first start time, perform equal or lower priority inter-frequency or lower priority inter-RAT frequency neighbor cell measurement; or
if a signal status of the serving cell satisfies a second preset condition or current time has not reached the first start time, skip performing equal or lower priority inter-frequency or lower priority inter-RAT frequency neighbor cell measurement, or if a signal status of the serving cell does not satisfy a second preset condition and current time has reached the first start time, perform equal or lower priority inter-frequency or lower priority inter-RAT frequency neighbor cell measurement, wherein
the second preset condition comprises that signal strength is greater than the third threshold and signal quality is higher than the fourth threshold.

16. The apparatus according to claim 14, wherein the measurement module is configured for at least one of the following:
for higher priority inter-frequency or inter-RAT frequency neighbor cell measurement, the measurement module is configured to:
perform higher priority inter-frequency or inter-RAT frequency neighbor cell measurement throughout; or
if current time has not reached the second start time, skip performing higher priority inter-frequency or inter-RAT frequency neighbor cell measurement, or if current time has reached the second start time, perform higher priority inter-frequency or inter-RAT frequency neighbor cell measurement;
for intra-frequency, the measurement module is configured to:
if a signal status of the serving cell satisfies a first preset condition and current time has not reached the second start time, skip performing intra-frequency neighbor cell measurement, or if a signal status of the serving cell does not satisfy a first preset condition or current time has reached the second start time, perform intra-frequency neighbor cell measurement; or
if a signal status of the serving cell satisfies a first preset condition or current time has not reached the second start time, skip performing intra-frequency neighbor cell measurement if a signal status of the serving cell does not satisfy a first preset condition and current time has reached the second start time, perform intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the measurement module is configured to:
if a signal status of the serving cell satisfies a second preset condition and current time has not reached the second start time, skip performing equal or lower priority inter-frequency or lower priority inter-RAT frequency neighbor cell measurement, or if a signal status of the serving cell does not satisfy a second preset condition or current time has reached the second start time, perform equal or lower priority inter-frequency or lower priority inter-RAT frequency neighbor cell measurement; or
if a signal status of the serving cell satisfies a second preset condition or current time has not reached the second start time, skip performing equal or lower priority inter-frequency or lower priority inter-RAT frequency neighbor cell measurement, or if a signal status of the serving cell does not satisfy a second preset condition and current time has reached the second start time, perform equal or lower priority inter-frequency or lower priority inter-RAT frequency neighbor cell measurement, wherein
the second preset condition comprises that signal strength is greater than the third threshold and signal quality is higher than the fourth threshold.

17. The apparatus according to claim 14, wherein the measurement module is configured for at least one of the following:
for higher priority inter-frequency or inter-RAT frequency neighbor cell measurement, the measurement module is configured to:
perform higher priority inter-frequency or inter-RAT frequency neighbor cell measurement throughout; or
if current time has not reached the third start time, skip performing higher priority inter-frequency or inter-RAT frequency neighbor cell measurement, or if current time has reached the third start time, perform higher priority inter-frequency or inter-RAT frequency neighbor cell measurement;
for intra-frequency, the measurement module is configured to:
if a signal status of the serving cell satisfies a first preset condition and current time has not reached the fourth start time, skip performing intra-frequency neighbor cell measurement, or if a signal status of the serving cell does not satisfy a first preset condition or current time has reached the fourth start time, perform intra-frequency neighbor cell measurement; or
if a signal status of the serving cell satisfies a first preset condition or current time has not reached the fourth start time, skip performing intra-frequency neighbor cell measurement if a signal status of the serving cell does not satisfy a first preset condition and current time has reached the fourth start time, perform intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the measurement module is configured to:
if a signal status of the serving cell satisfies a second preset condition and current time has not reached the fifth start time, skip performing equal or lower priority inter-frequency or lower priority inter-RAT frequency neighbor cell measurement, or if a signal status of the serving cell does not satisfy a second preset condition or current time has reached the fifth start time, perform equal or lower priority inter-frequency or lower priority inter-RAT frequency neighbor cell measurement; or
if a signal status of the serving cell satisfies a second preset condition or current time has not reached the fifth start time, skip performing equal or lower priority inter-frequency or lower priority inter-RAT frequency neighbor cell measurement, or if a signal status of the serving cell does not satisfy a second preset condition and current time has reached the fifth start time, perform equal or lower priority inter-frequency or lower priority inter-RAT frequency neighbor cell measurement, wherein
the second preset condition comprises that signal strength is greater than the third threshold and signal quality is higher than the fourth threshold.

18. The apparatus according to claim 14, wherein the measurement module is configured for at least one of the following:
for higher priority inter-frequency or inter-RAT frequency neighbor cell measurement, the measurement module is configured to:
perform higher priority inter-frequency or inter-RAT frequency neighbor cell measurement throughout; or
if current time has not reached the sixth start time, skip performing higher priority inter-frequency or inter-RAT frequency neighbor cell measurement, or if current time has reached the sixth start time, perform higher priority inter-frequency or inter-RAT frequency neighbor cell measurement;
for intra-frequency, the measurement module is configured to:
if a signal status of the serving cell satisfies a first preset condition and current time has not reached the seventh start time, skip performing intra-frequency neighbor cell measurement, or if a signal status of the serving cell does not satisfy a first preset condition or current time has reached the seventh start time, perform intra-frequency neighbor cell measurement; or
if a signal status of the serving cell satisfies a first preset condition or current time has not reached the seventh start time, skip performing intra-frequency neighbor cell measurement if a signal status of the serving cell does not satisfy a first preset condition and current time has reached the seventh start time, perform intra-frequency neighbor cell measurement, wherein
the first preset condition comprises that signal strength is greater than the first threshold and signal quality is higher than the second threshold; and
for equal or lower priority inter-frequency or lower priority inter-RAT frequency, the measurement module is configured to:
if a signal status of the serving cell satisfies a second preset condition and current time has not reached the eighth start time, skip performing equal or lower priority inter-frequency or lower priority inter-RAT frequency neighbor cell measurement, or if a signal status of the serving cell does not satisfy a second preset condition or current time has reached the eighth start time, perform equal or lower priority inter-frequency or lower priority inter-RAT frequency neighbor cell measurement; or
if a signal status of the serving cell satisfies a second preset condition or current time has not reached the eighth start time, skip performing equal or lower priority inter-frequency or lower priority inter-RAT frequency neighbor cell measurement, or if a signal status of the serving cell does not satisfy a second preset condition and current time has reached the eighth start time, perform equal or lower priority inter-frequency or lower priority inter-RAT frequency neighbor cell measurement, wherein
the second preset condition comprises that signal strength is greater than the third threshold and signal quality is higher than the fourth threshold.

19. The apparatus according to claim 13, wherein the obtaining module is configured for at least one of the following:
obtaining the target configuration information by using a system broadcast message;
obtaining the target configuration information by using dedicated signaling; and
obtaining the target configuration information by using a historically received message.

20. The apparatus according to claim 13, wherein an action of starting neighbor cell measurement is agreed in a protocol or configured by a network side device.

21. An apparatus for starting neighbor cell measurement, comprising:
a sending module, configured to send target configuration information to a terminal, wherein the target configuration information is used to indicate the terminal to start neighbor cell measurement based on the target configuration information, and the target configuration information comprises time information used to indicate the terminal to start neighbor cell measurement.

22. The apparatus according to claim 21, wherein the target configuration information comprises at least one of the following:
first time, wherein the first time is used to indicate service stop time of a serving cell;
a first offset, wherein the first time and the first offset are used to indicate first start time for performing neighbor cell measurement;
second time, wherein the second time is used to indicate second start time for performing neighbor cell measurement;
a second offset, wherein the first time and the second offset are used to indicate third start time for performing higher priority inter-frequency or inter-RAT frequency neighbor cell measurement;
a third offset, wherein the first time and the third offset are used to indicate fourth start time for performing intra-frequency neighbor cell measurement;
a fourth offset, wherein the first time and the fourth offset are used to indicate fifth start time for performing equal or lower priority inter-frequency or lower priority inter-RAT frequency neighbor cell measurement;
third time, wherein the third time is used to indicate sixth start time for performing higher priority inter-frequency or inter-RAT frequency neighbor cell measurement;
fourth time, wherein the fourth time is used to indicate seventh start time for performing intra-frequency neighbor cell measurement;
fifth time, wherein the fifth time is used to indicate eighth start time for performing equal or lower priority inter-frequency or lower priority inter-RAT frequency neighbor cell measurement;
a first threshold, wherein the first threshold is used to indicate a signal strength threshold that a serving cell needs to satisfy for starting intra-frequency neighbor cell measurement;
a second threshold, wherein the second threshold is used to indicate a signal quality threshold that the serving cell needs to satisfy for starting intra-frequency neighbor cell measurement;
a third threshold, wherein the third threshold is used to indicate a signal strength threshold that the serving cell needs to satisfy for starting equal or lower priority inter-frequency or lower priority inter-RAT frequency neighbor cell measurement; and
a fourth offset, wherein the fourth offset is used to indicate a signal quality threshold that the serving cell needs to satisfy for starting equal or lower priority inter-frequency or lower priority inter-RAT frequency neighbor cell measurement.

23. The apparatus according to claim 21, wherein the sending module is configured for at least one of the following:
sending the target configuration information to the terminal by using a system broadcast message;
sending the target configuration information to the terminal by using dedicated signaling; and
sending the target configuration information to the terminal by using a historically received message.

24. The apparatus according to claim 21, wherein an action that the terminal starts neighbor cell measurement is agreed in a protocol or configured by a network side device.

25. A terminal, comprising a processor, a memory, and a program or an instruction that is stored in the memory and that is executable on the processor, wherein when the program or the instruction is executed by the processor, steps of the method for starting neighbor cell measurement according to any one of claims 1 to 8 are implemented.

26. A network side device, comprising a processor, a memory, and a program or an instruction that is stored in the memory and that is executable on the processor, wherein when the program or the instruction is executed by the processor, steps of the method for starting neighbor cell measurement according to any one of claims 9 to 12 are implemented.

27. A readable storage medium, wherein the readable storage medium stores a program or an instruction, and when the program or the instruction is executed by a processor, steps of the method for starting neighbor cell measurement according to any one of claims 1 to 8 are implemented, or steps of the method for starting neighbor cell measurement according to any one of claims 9 to 12 are implemented.

28. A chip, comprising a processor and a communication interface, wherein the communication interface is coupled to the processor, and the processor is configured to run a program or an instruction to implement steps of the method for starting neighbor cell measurement according to any one of claims 1 to 8 or the method for starting neighbor cell measurement according to any one of claims 9 to 12.

29. A computer program, wherein the computer program is stored in a non-volatile storage medium, and when the computer program is executed by at least one processor, steps of the method for starting neighbor cell measurement according to any one of claims 1 to 8 are implemented, or steps of the method for starting neighbor cell measurement according to any one of claims 9 to 12 are implemented.
